# EUROPEAN PATENT APPLICATION

(11) **EP 4 202 246 A1**
(43) Date of publication of application: **28.06.2023**
(21) Application number: 21861378.4
(22) Date of filing: 19.08.2021
(51) Int. Cl.: F16C 33/24, C04B 38/00, C04B 35/569

(54) **SLIDING MEMBER**

(30) Priority: 24.08.2020 JP 2020140867
(71) Applicant: Kyocera Corporation, Kyoto-shi Kyoto 612-8501 (JP)
(72) Inventor: SAIKI, Masatoshi, Kyoto-shi, Kyoto 612-8501 (JP); TAKIGAWA, Kazuaki, Kyoto-shi, Kyoto 612-8501 (JP)
(74) Representative: Viering, Jentschura & Partner mbB Patent- und Rechtsanwälte
(86) International application number: PCT/JP2021/030359
(87) International publication number: WO 2022/044950

(57) **Abstract**

A sliding member (1) has pore-dense portions (4) in which pores (10) are densely packed on a sliding surface (3) of a main body (2) made of a ceramic.

## Description

### TECHNICAL FIELD

An embodiment of the disclosure relates to a sliding member.

### BACKGROUND OF INVENTION

Sliding members made of a ceramic such as silicon carbide are known (see, for example, Patent Document 1).

### CITATION LIST

### PATENT LITERATURE

Patent Document 1: JP 2002-255651 A

### SUMMARY

It is an object of one aspect of the embodiment to provide a sliding member that can maintain good sliding properties over a long period of time.

### SOLUTION TO PROBLEM

A sliding member according to an aspect of the embodiment has pore-dense portions in which a plurality of pores are densely packed on a sliding surface of a main body made of a ceramic.

### BRIEF DESCRIPTION OF THE DRAWINGS

FIG. 1 is a perspective view of a sliding member in an embodiment.
FIG. 2 is a diagram showing an SEM observation photograph of a sliding surface in an embodiment.
FIG. 3 is a diagram showing an SEM observation photograph of a sliding surface in an embodiment.
FIG. 4 is a diagram showing an SEM observation photograph of a sliding surface in an embodiment.
FIG. 5 is a diagram showing an SEM observation photograph of a sliding surface in an embodiment.
FIG. 6 is a diagram showing an SEM observation photograph of a sliding surface in an embodiment.
FIG. 7 is a diagram showing an example of configurations of pore-dense portions in an embodiment.
FIG. 8 is a diagram showing an example of configurations of pore-dense portions in an embodiment.

### DESCRIPTION OF EMBODIMENTS

An embodiment of the sliding member disclosed in the present application will now be described with reference to the accompanying drawings. Note that the present invention is not limited by the embodiment described below.

Sliding members made of ceramics such as silicon carbide are known. However, the prior art described above has room for improvement in terms of maintaining good sliding properties over a long period of time.

Realization of a technology that can overcome the above problem and maintain good sliding properties in a sliding member over a long period of time is expected.

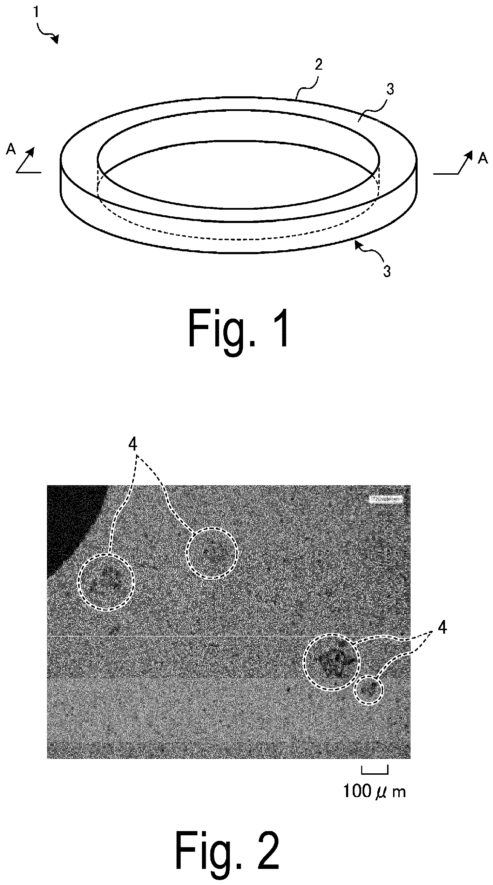

FIG. 1 is a plan view of a sliding member 1 in an embodiment. As shown in FIG. 1, the sliding member 1 in the embodiment has a main body 2 made of a ceramic. The main body 2 has sliding surfaces 3.

These sliding surfaces 3 are surfaces with a mirror finish and slide against another member (not shown). In the present disclosure, the main body 2 is, for example, ring-shaped, and both main surfaces are sliding surfaces 3.

The sliding member 1 in the embodiment can be used in, for example, bushings, faucet valves, drilling tools, saw blades, pulleys, gears, threaded joints, bearings, seal rings, guide members, and the like.

The ceramic constituting the main body 2 can be an oxide ceramic such as alumina (Al₂O₃), zirconia (ZrO₂), or spinel (MgAl₂O₄), or a non-oxide ceramic such as silicon carbide (SiC), silicon nitride (Si₃N₄), aluminum nitride (AlN), titanium nitride (TiN), or titanium carbide (TiC).

Among these, the main component of the main body 2 is preferably silicon carbide, silicon nitride, or alumina from the viewpoint of improving the sliding properties of the sliding surfaces 3.

In the embodiment, the main component of the main body 2 is more preferably silicon carbide. Because this can improve the heat conductivity of the main body 2, the frictional heat that is generated when sliding against another member can be efficiently dissipated.

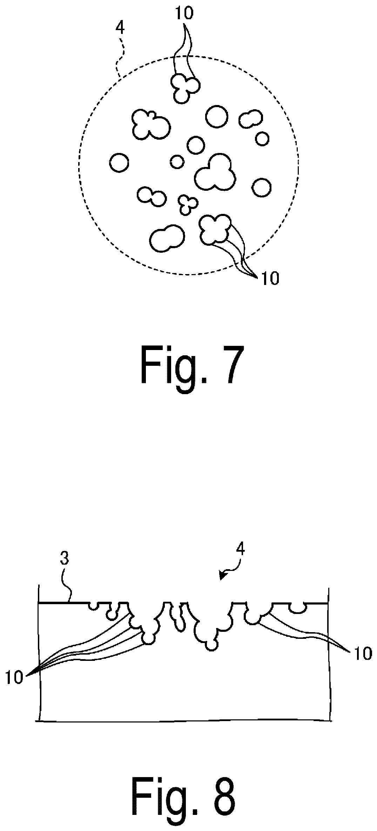

FIGs. 2 to 6 are diagrams showing SEM observation photographs of sliding surfaces 3 in the embodiment. In the SEM observation photographs shown below, the dark-colored portions are portions in which no substance is present on the surface. As shown in FIG. 2 etc., the sliding surfaces 3 of the sliding member 1 in the embodiment have pore-dense portions 4 in which pores 10 are densely packed (see FIG. 7).

The number of pores 10 contained in one of the pore-dense portions 4 is, for example, 40 (pores) or more and 1,000 (pores) or less, and more preferably 100 (pores) or more and 500 (pores) or less.

The size of the pore-dense portion 4 is, for example, 25 (µm) or more and 300 (µm) or less, and preferably 30 (µm) or more and 150 (µm) or less, when observed in a cross-sectional view.

The area of the pore-dense portion 4 is, for example, 450 (µm2) or more and 75,000 (µm2) or less, and preferably 600 (µm2) or more and 20,000 (µm2) or less, when observed in a cross-sectional view.

The size of the pores 10 densely packed in the pore-dense portion 4 is, for example, 0.5 (µm) or more and 10 (µm) or less.

Here, because the sliding surfaces 3 in the embodiment have pore-dense portions 4, a large number of the pores 10 in the pore-dense portions 4 can retain lubricant. As a result, the lubricant retained in the pore-dense portions 4 can be supplied to the sliding surfaces 3 when the sliding member 1 slides against another member.

Therefore, in this embodiment, a sliding member 1 that is able to maintain good sliding properties over a long period of time can be realized.

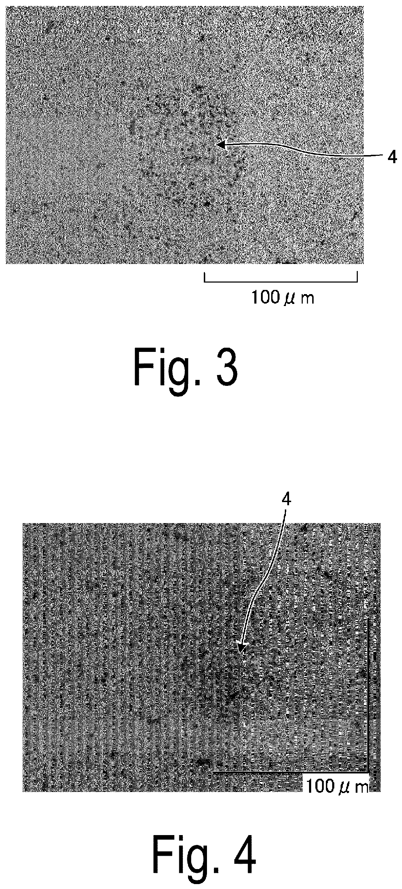

A plurality of pores 10 are preferably densely packed in a spherical shape (see FIG. 7) in the pore-dense portions 4 of the embodiment as shown in FIG. 3, etc. As a result, the frictional force generated when sliding against another member can be dispersed, making uneven wear on the sliding surfaces 3 less likely.

Therefore, in the embodiment, a sliding member 1 can be realized that is able to maintain good sliding properties over a longer period of time. In the embodiment, note that the sliding surfaces 3 may include pore-dense portions 4 in which pores are densely packed in a spherical shape and pore-dense portions 4 in which pores are densely packed in a shape other than a spherical shape, and that only pore-dense portions 4 in which pores are densely packed in a shape other than a spherical shape may be present on the sliding surfaces 3.

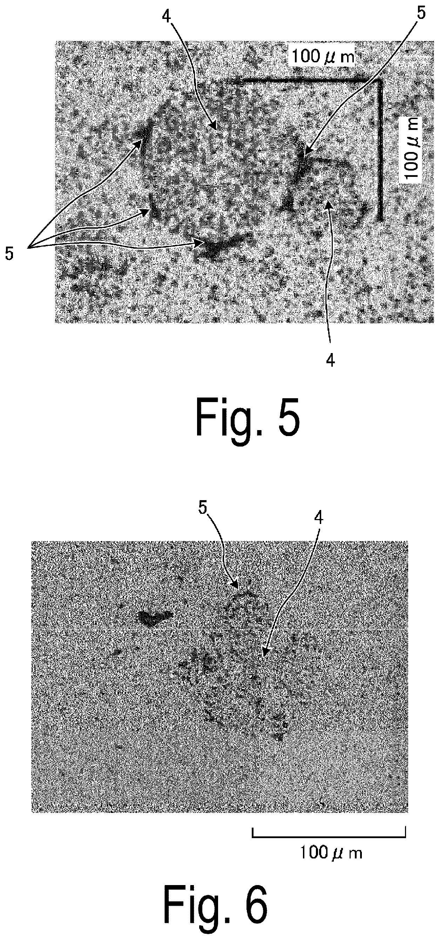

In the embodiment, the sliding surfaces 3 may have pore-dense portions 4 and voids 5 located around the pore-dense portions 4 as shown in FIG. 5, etc. The voids 5 are located along the contours of the pore-dense portions 4, and are, for example, larger than the pores 10 in the pore-dense portions 4 (see FIG. 7) and have an acute angle at end portions thereof.

Thus, because the sliding surfaces 3 of the sliding member 1 have voids 5 in addition to pore-dense portions 4, lubricant can be retained in the voids 5 as well. In this way, the lubricant retained in the pore-dense portions 4 and the voids 5 can be supplied to the sliding surfaces 3 when the sliding member 1 slides against another member.

Therefore, in the embodiment, a sliding member 1 can be realized that is able to maintain good sliding properties over a longer period of time.

The voids 5 in the embodiment are preferably larger than the pores 10 in the pore-dense portions 4. The length of the voids 5 along the contours of the pore-dense portions 4 is, for example, 20 (µm) or more and 60 (µm) or less. Note that the length of the voids 5 may be less than 20 (µm) or longer than 60 (µm).

In this way, the lubricant held in the large voids 5 can then be supplied to the small pores 10 in the pore-dense portions 4. Therefore, in the embodiment, a sliding member 1 can be realized that is able to maintain good sliding properties over a longer period of time.

The voids 5 in the embodiment are preferably shaped to have an acute angle at end portions thereof. This makes it easier to retain lubricant in the voids 5.

Therefore, in the embodiment, a sliding member 1 can be realized that is able to maintain good sliding properties over a longer period of time.

In the embodiment, the inner diameter of the pores 10 located in the pore-dense portions 4 of the sliding surfaces 3 is preferably larger than the inner diameter of the pores 10 located in the main body 2 outside of the pore-dense portions 4. For example, the inner diameter of the pores 10 located in the pore-dense portions 4 is from about 0.8 (µm) to 5.0 (µm), and the inner diameter of the pores 10 located in the main body 2 outside of the pore-dense portions 4 is preferably from about 0.5 (µm) to 2.0 (µm).

In this way, the overall volume of the pores 10 in the pore-dense portions 4 can be increased, so that the pore-dense portions 4 retain more lubricant. As a result, more lubricant retained in the pore-dense portions 4 can be supplied to the sliding surfaces 3 when the sliding member 1 slides against another member.

Therefore, in the embodiment, a sliding member 1 can be realized that is able to maintain good sliding properties over a longer period of time.

In the embodiment, the porosity of the pore-dense portions 4 is preferably in the range from 5 (%) to 15 (%). If the porosity of pore-dense portions 4 is less than 5 (%), the amount of lubricant retained is reduced, and the period over which good sliding properties can be maintained is shortened. If the porosity of the pore-dense portions 4 is greater than 15 (%), the strength of the pore-dense portions 4 is reduced, and the main body 2 tends to shed particles when sliding against another member.

However, by setting the porosity of the pore-dense portions 4 in the embodiment within the range from 5 (%) to 15 (%), good sliding properties can be maintained over a long period of time, and the shedding of particles by the main body 2 can be suppressed.

In the embodiment, the porosity of the pore-dense portions 4 is preferably in the range from 1.5 to 5 times the porosity of the main body 2 outside of the pore-dense portions 4. This makes it possible to easily set the porosity of the pore-dense portions 4 within the range from 5 (%) to 15 (%).

In the embodiment, pores 10 communicating with each other are preferably present in the pore-dense portions 4 as shown in FIGs. 7 and 8. FIGs. 7 and 8 are diagrams showing examples of configurations of pore-dense portions 4 in the embodiment.

Because pores 10 communicating with each other are present in the pore-dense portions 4, the overall volume of the pores 10 in the pore-dense portions 4 can be increased, so that the pore-dense portions 4 can retain more lubricant.

Because a large number of the pores 10 and the pores 10 of different sizes communicate with each other, the contact area with the lubricant can be enlarged, so that the lubricant retaining power of the pore-dense portions 4 can be increased.

Because a plurality of pores 10 communicate with each other in the depth direction as shown in FIG. 8, the lubricant can be retained in the pores 10 communicating in the depth direction, so that the amount of lubricant retained can be further increased, and the lubricant retaining power can be further improved.

Therefore, in the embodiment, a sliding member 1 can be realized that is able to maintain good sliding properties over a longer period of time.

An overview of the manufacturing process for a sliding member 1 in the embodiment will now be provided. In the following description, the sliding member 1 contains silicon carbide as a main component, but the present disclosure is not limited to the following example.

First, a powder of the main component silicon carbide and a powder of a sintering aid (such as alumina, yttrium oxide (Y₂O₃), boron carbide (B₄C), etc.) are prepared. The silicon carbide powder and sintering aid powder are mixed together at a predetermined ratio, water and a dispersant are added, and the components are mixed together for a predetermined period of time using a ball mill, bead mill, or the like to obtain a primary slurry.

An organic binder is added to the resulting primary slurry and the components are mixed together to obtain a secondary slurry. The resulting secondary slurry is then spray-dried to obtain granules whose main component is silicon carbide.

When obtaining these granules, the appropriate spray drying conditions are set so that granules with a size of 30 (µm) or more and 120 (µm) or less account for 70 (volume %) or more of the total granules.

Some of the resulting granules are treated with a thermosetting resin, and then heattreated at a temperature from about 100 (°C) to 200 (°C) to obtain thermoset granules.

The thermosetting resin to be included in the granules can be, for example, a phenol resin, a urea resin, a melamine resin, or a silicone resin, but among these, a phenol resin is preferred. The amount of the thermosetting resin to be included in the granules is, for example, 0.1 (wt%) or more and 40 (wt%) or less, and preferably 1 (wt%) or more and 7 (wt%) or less.

Non-thermoset granules and thermoset granules are mixed together at a predetermined ratio, introduced into a predetermined molding die, and press-molded into a ring shape at an appropriately set pressure.

In the molding process, the non-thermoset granules are crushed by the pressure and the densely packed voids inside the granules are also crushed, while the thermoset granules are not crushed by the pressure, and many of the densely packed voids inside the granules remain intact inside the compact.

The resulting compact is fired in an argon atmosphere. Note that the firing is preferably performed in a nitrogen atmosphere when silicon nitride is used as the main component, and the firing is preferably performed in an air atmosphere when alumina is used as the main component.

In the firing process, the material is first held at a temperature that is from 50°C to 100°C lower than a predetermined sintering temperature for 2 to 10 hours. The material is held at the predetermined sintering temperature for 1 to 10 hours, and then cooled to room temperature to obtain a sintered compact.

In the firing process, the firing leaves numerous densely packed voids inside the thermoset granules and forms pore-dense portions 4 inside the sintered compact. Because of the difference in hardness and thermal shrinkage between the thermoset granules and non-thermoset granules, the voids 5 are formed around the pore-dense portions 4 (that is, the thermoset granules) when the sintered compact cools.

Finally, the resulting sintered compact is subjected to a polishing treatment such as mirror finishing. In this way, the sliding member 1 can be obtained in which the pore-dense portions 4 and the voids 5 are exposed on the sliding surfaces 3 with a mirror finish.

While an embodiment of the present disclosure was described above, the present disclosure is not limited to the embodiment above, and various modifications can be made without departing from the spirit of the present disclosure. For example, the ring-shaped sliding member 1 is shown in the embodiment described above, but the shape of the sliding member 1 is not limited to a ring shape, and the technique of the present disclosure can be applied to sliding members 1 of various shapes.

It is to be understood that the embodiment disclosed at this time is illustrative in all respects and is not limitative. In fact, the embodiment described above may be embodied in many different forms. Aspects of the embodiment described above may be omitted, substituted, or modified in various ways without departing from the scope and spirit of the appended claims.

### REFERENCE SIGNS

1 Sliding member
2 Main body
3 Sliding surface
4 Pore-dense portion
5 Void
10 Pore

## Claims

1. A sliding member comprising:
pore-dense portions with a plurality of densely packed pores on a sliding surface of a main body made of a ceramic.

2. The sliding member according to claim 1, wherein
the sliding surface has the pore-dense portions and voids located around the pore-dense portions.

3. The sliding member according to claim 2, wherein
the voids are larger than the pores.

4. The sliding member according to claim 2 or 3, wherein
the voids are shaped with an acute angle at end portions.

5. The sliding member according to any one of claims 1 to 4, wherein
the plurality of pores are densely packed in a spherical shape in the pore-dense portions.

6. The sliding member according to any one of claims 1 to 5, wherein
on the sliding surface, an inner diameter of the pores located in the pore-dense portions is larger than an inner diameter of the pores located in the main body outside of the pore-dense portions.

7. The sliding member according to any one of claims 1 to 6, wherein
pores communicating with each other are present in the pore-dense portions.

8. The sliding member according to any one of claims 1 to 7, wherein
the main body comprises silicon carbide as a main component.
